# EUROPEAN PATENT SPECIFICATION

(11) **EP 2 575 312 B1**
(45) Date of publication and mention of the grant of the patent: **30.07.2014**
(21) Application number: 12197487.7
(22) Date of filing: 05.09.2008
(51) Int. Cl.: H04L 27/26, H04J 11/00

(54) **Method and system for transmitting and receiving signals**
Verfahren und System zum Übertragen und Empfangen von Signalen
Procédé et système de transmission et de réception de signaux

(30) Priority: 06.09.2007 US 970523 P
(43) Date of publication of application: 03.04.2013
(62) Divisional of application: 08793727.2
(73) Proprietor: LG Electronics, Inc., Seoul, 150-721 (KR)
(72) Inventor: Ko, Woo Suk, 137-724 Seoul (KR); Moon, Sang Chul, 137-724 Seoul (KR)
(74) Representative: Cabinet Plasseraud

(56) References cited:
- López Arranz C. A.et al: "Design of a simulation platform to test next generation of terrestrial DVB", UPCommons - Universitat Politècnica de Catalunya , 19 July 2007 (2007-07-19), pages Frontpg.-122, XP002694807, Retrieved from the Internet: URL:http://upcommons.upc.edu/pfc/bitstream /2099.1/4218/1/memoria.pdf [retrieved on 2013-02-25]

## Description

### Technical Field

The present invention relates to a method of efficiently transmitting and receiving signals and efficient transmitter and receiver for an OFDM (Orthogonal Frequency Division Multiplexing) system including a TFS (Time-Frequency Slicing).
López Arranz C.A. et al "Design of a simulation platform to test next generation of terresztrial DVB" (Upcommons - Universitat Politècnica de Catalunya, 19 July 2007, XP002694807) relates to the design and development of a physical layer simulator of the whole DVB-T standard, including both the complete transmission and reception procedures.

### Background Art

TFS (Time Frequency Slicing) technique has been introduced for broadcasting. When a TFS is used, a single service can be transmitted through multiple RF (Radio Frequency) channels on a two-dimensional time-frequency space.

OFDM (Orthogonal Frequency Division Multiplexing) is a frequency-division multiplexing (FDM) scheme utilized as a digital multi-carrier modulation method. A large number of closely-spaced orthogonal sub-carriers are used to carry data. The data are divided into several parallel data streams or channels, one for each sub-carrier. Each sub-carrier is modulated with a conventional modulation scheme (such as quadrature amplitude modulation or phase shift keying) at a low symbol rate, maintaining total data rates similar to conventional single-carrier modulation schemes in the same bandwidth.

OFDM has developed into a popular scheme for wideband digital communication, whether wireless or over copper wires, used in applications such as digital television and audio broadcasting, wireless networking and broadband internet access.

When TFS, which uses multiple RF bands for each transmitter is combined with OFDM, frequency diversity gain and statistical multiplexing gain can be obtained, thus, resources can be efficiently utilized.

### Disclosure of Invention

### Technical Problem

It is, therefore, an object of the present invention to provide a method of efficiently transmitting and receiving signals and efficient transmitter and receiver for an OFDM system including TFS.

### Technical Solution

According to an aspect of the present invention, there is provided a method of transmitting signals according to claim 1.

According to another aspect of the present invention, there is provided an apparatus of transmitting broadcast signals according to claim 5.

According to yet another aspect of the present invention, there is provided a method of receiving signals according to claim 9.

It is to be understood that both the foregoing general description and the following detailed description of the present invention are exemplary and explanatory and are intended to provide further explanation of the invention as claimed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Advantageous Effects

According to the present invention, it is possible to provide a method of efficiently transmitting and receiving signals and efficient transmitter and receiver for an OFDM system including TFS.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a block diagram of an example of a TFS (Time Frequency Slicing)-OFDM (Orthogonal Frequency Division Multiplexing) transmitter.
Fig. 2 is a block diagram of an example of the input processor shown in the Fig. 1.
Fig. 3 is a block diagram of an example of the BICM (Bit-Interleaved Coding and Modulation) shown in Fig. 1.
Fig. 4 is a block diagram of an example of the Frame Builder shown in Fig. 1.
Fig. 5 is a table of an example of a hybrid modulation ratio when an LDPC block length is 64800 bits.
Fig. 6 is a table of an example of a hybrid modulation ratio when an LDPC block length is 16200 bits.
Fig. 7 is a block diagram of an example of the QAM mapper shown in Fig. 1.
Fig. 8 is a block diagram of an example of the QAM mapper combined with an inner encoder and an inner interleaver.
Fig. 9 is an example of a bit interleaver.
Fig. 10 is a table of an example of the bit interleaver when an LDPC block length is 64800 bits.
Fig. 11 is a table of an example of the bit interleaver when an LDPC block length is 16200 bits.
Fig. 12 is an example of the demux shown in Fig. 1.
Fig. 13 is another example of the demux shown in Fig. 1.
Fig. 14 is a relationship between an input bitstream of the bit interleaver and an output bitstream of the demux.
Fig. 15 is an example of a QAM symbol mapping.
Fig. 16 is a block diagram of an example of the MIMO/MISO decoder shown in Fig. 1.
Fig. 17 is a block diagram of an example of the modulator, specifically an example of an OFDM modulator.
Fig. 18 is a block diagram of an example of the analog processor shown in Fig. 1.
Fig. 19 is a block diagram of an example of a TFS-OFDM receiver.
Fig. 20 is a block diagram of an example of the AFE (Analog Front End) shown in Fig. 19.
Fig. 21 is a block diagram of an example of the demodulator, specifically an OFDM demodulator.
Fig. 22 is a block diagram of an example of the MIMO/MISO decoder shown in Fig. 19.
Fig. 23 is a block diagram of an example of the frame parser shown in Fig. 19.
Fig. 24 is a block diagram of an example of the QAM demapper shown in Fig. 23.
Fig. 25 is a block diagram of an example of the QAM demapper combined with an inner deinterleaver.
Fig. 26 is a block diagram of an example of the BICM decoder shown in Fig. 19.
Fig. 27 is a block diagram of an example of the output processor shown in Fig. 19.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

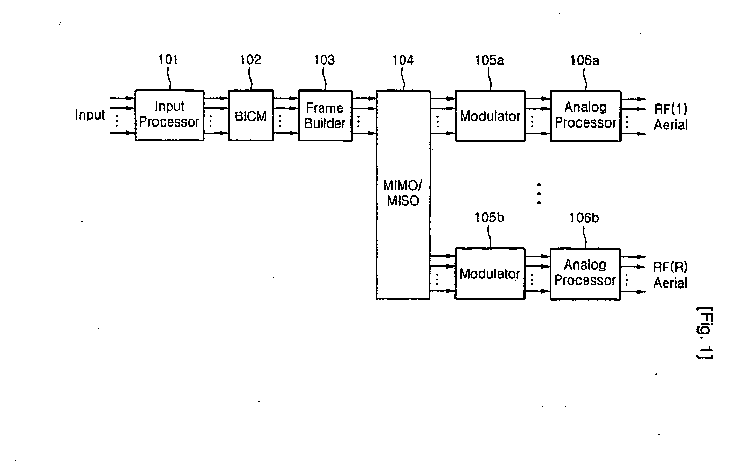

Fig. 1 shows an example of proposed TFS (Time Frequency Slicing)-OFDM (Orthogonal Frequency Division Multiplexing) transmitter. A multiple MPEG2-TS (Transport Stream) and a multiple Generic stream can be inputted into a TFS transmitter. The input processor (101) can split the inputted streams into a multiple output signals for a multiple PLP (Physical Layer Path). The BICM (Bit-Interleaved Coding and Modulation) (102) can encode and interleave the PLP individually. The frame builder (103) can transform the PLP into total R of RF bands. MIMO (Multiple-Input Multiple-Output)/MISO (Multiple-Input Single-Output) (104) technique can be applied for each RF band. Each RF band for each antenna can be individually modulated by the modulator (105a, b) and can be transmitted to antennas after being converted to an analog signal by the analog processor (106a, b).

### Mode for the Invention

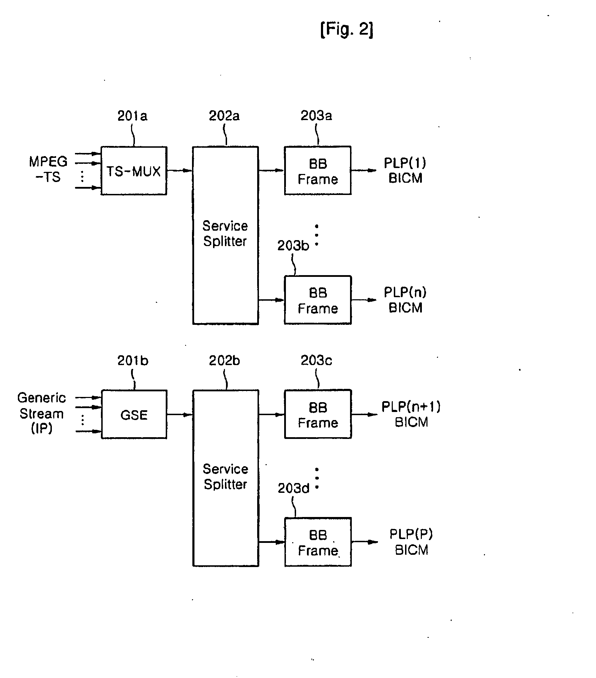

Fig. 2 is an example of the input processor. MPEG-TS (Transport Stream) can be multiplexed into a single output through TS-MUX (201a) and Generic streams (Internet protocol) can be transformed into a single output through GSE (General Stream Encapsulation) (201b). Each output from the TS-MUX and GSE can be split for multiple services by the service splitter (202a, b). PLP is a processing of each service. Each PLP can be transformed into a frame by the BB (Baseband) Frame (103a∼d).

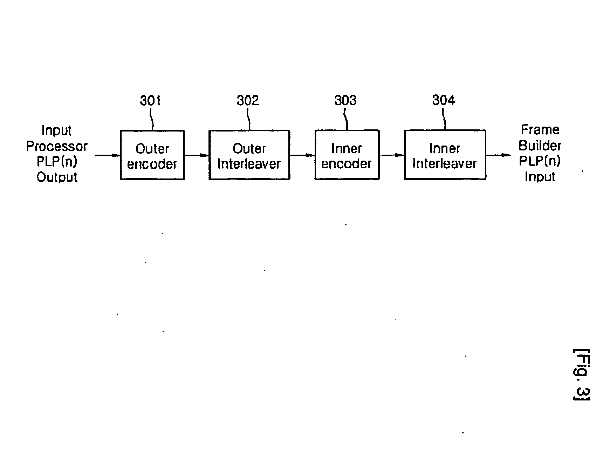

Fig. 3 is an example of the BICM. The Outer encoder (301) and the inner encoder (303) can add redundancy for error correction in a transmission channel. The outer interleaver (302) and the inner interleaver (304) can interleave data randomly to mitigate burst errors.

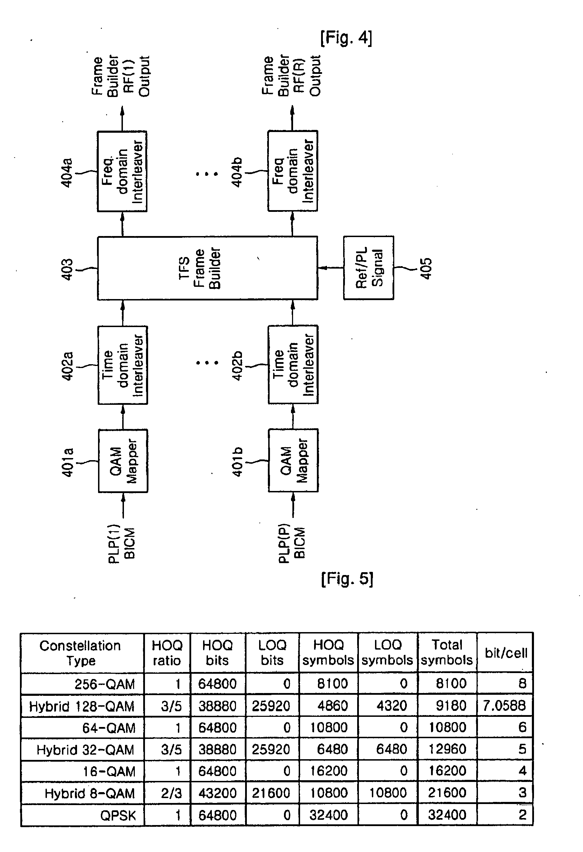

Fig. 4 is an example of the frame builder. QAM mapper (401a, b) can transform inputted bits into QAM symbols. Hybrid QAM can be used. Time domain interleaver (402a, b) can interleave data in time domain to make the data be robust against burst error. At this point, an effect of interleaving many RF bands can be obtained in a physical channel because the data are going to be transmitted to a multiple RF bands. TFS frame builder (403) can split inputted data to form TFS frames and send the TFS frames to total R of RF bands according to a TFS scheduling. Each RF band can be individually interleaved in frequency domain by frequency domain interleaver (404a, b) and can become robust against frequency selective fading. Ref (Reference Signals), PL (Physical Layer) signaling, and pilots can be inserted when the TFS frame is built (405).

By hybriding two Even-QAMs, which transmits even number of bits per QAM symbol, an Odd-QAM, which transmits odd number of bits per QAM symbol can be formed by a Hybrid QAM mapper. For example, hybrid 128-QAM can be obtained by hybriding 256-QAM and 64-QAM, hybrid 32-QAM can be obtained by hybriding 64-QAM and 16-QAM, and hybrid 8-QAM can be obtained by hybriding 16-QAM and 4-QAM.

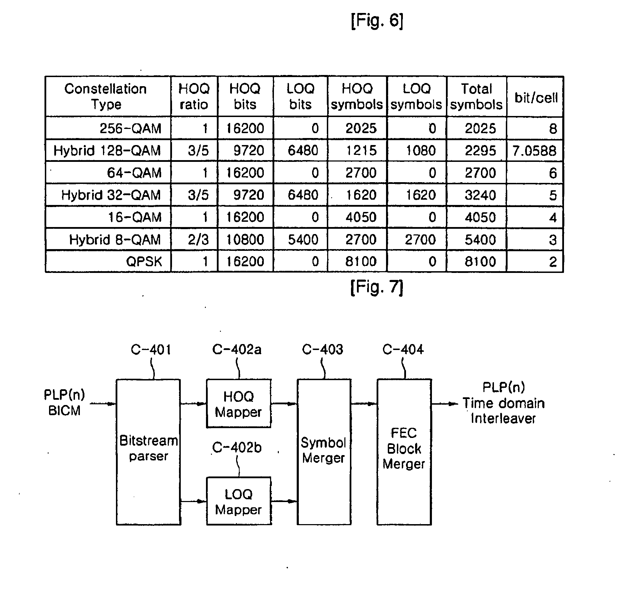

Fig. 5 and Fig. 6 show examples of a hybrid ratio when DVB-S2 LDPC (Low Density Parity Check) code is used as an inner code. The first column on the table represents constellation type. HOQ (Higher-Order QAM) ratio represents a ratio for higher-order QAM between two QAM types. LOQ (Lower-Order QAM) ratio is 1-HOQ ratio. Hybrid QAM can be obtained by two adjacent Even-QAMs. For example, hybrid 128-QAM (bit/cell=7) is obtained by hybriding 256-QAM and 64-QAM. HOQ bits and LOQ bits represent number of bits used for mapping into HOQ symbol and LOQ symbol respectively in one LDPC block. HOQ symbols and LOQ symbols represent number of symbols after symbol mapping. Total symbol is a sum of the HOQ symbols and the LOQ symbols. The last column on the table represents effective number of bits transmitted per QAM symbol. As seen on the table, only Hybrid 128-QAM shows slight difference from 7 bit/cell.

Fig. 6 shows a case when LDPC block length is 16200 bits. When a scheduling is performed to evenly distribute QAM symbols, which are generated by the Frame Builder, to RF bands of TFS system, the value of the total symbols should be divisible by a least common multiple of each index number of RF band. For example, if six RF bands are allowed, then the value of total symbols on the table should be divisible by a least common multiple of 1 through 6, i.e., 60. For the case shown in Fig. 5, it is divisible. However, for the case shown in Fig. 6, it is not divisible. If LDPC block length is 16200 bits as shown in Fig. 6, the total symbols on the table can be made divisible by 60 by combining four of the LDPC blocks into a single LDPC block having a length of 64800 as in Fig. 5.

Fig. 7 shows an example of QAM mapper using hybrid modulation. Bit stream parser(c-401) can parse inputted bitstreams into HOQ mapper(c-402a) and LOQ mapper(c-402b). The symbol merger(c-403) can merge the two inputted symbol streams into a single symbol stream. FEC (Forward Error Correction) block merger (c-404), for example, can combine four of bit symbol blocks having a length of 16200 into a single block having a length of 64800.

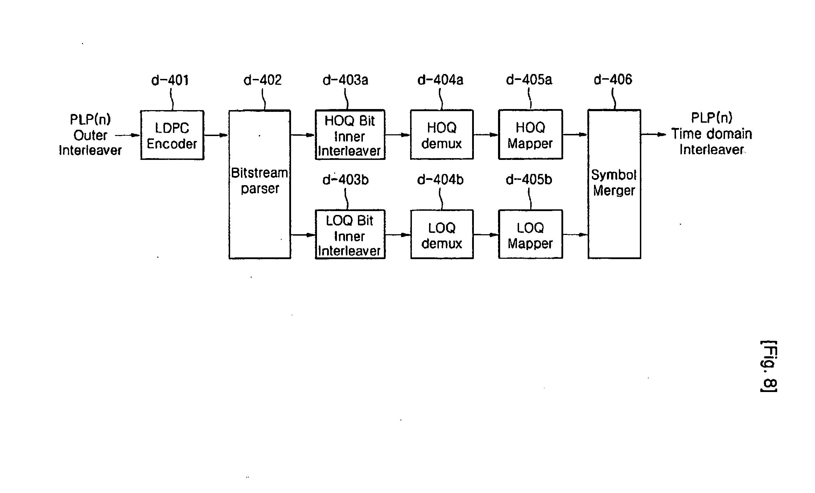

Fig. 8 shows an example of QAM mapper combined with inner interleavers. Bitstreams can be divided by bitstream parser (d-402) into bitstreams for HOQ and LOQ mappers. Each bitstream goes through bit interleaving (d-403a, d-403b) and demux (d-404a, d-406) processes. Throughout these processes, characteristics of LDPC codeword and constellation reliability can be combined. Each output can be converted into symbolstreams by the HOQ and LOQ mappers (d-405a, d-405b), then merged into a single symbolstream by the symbol merger (d-406).

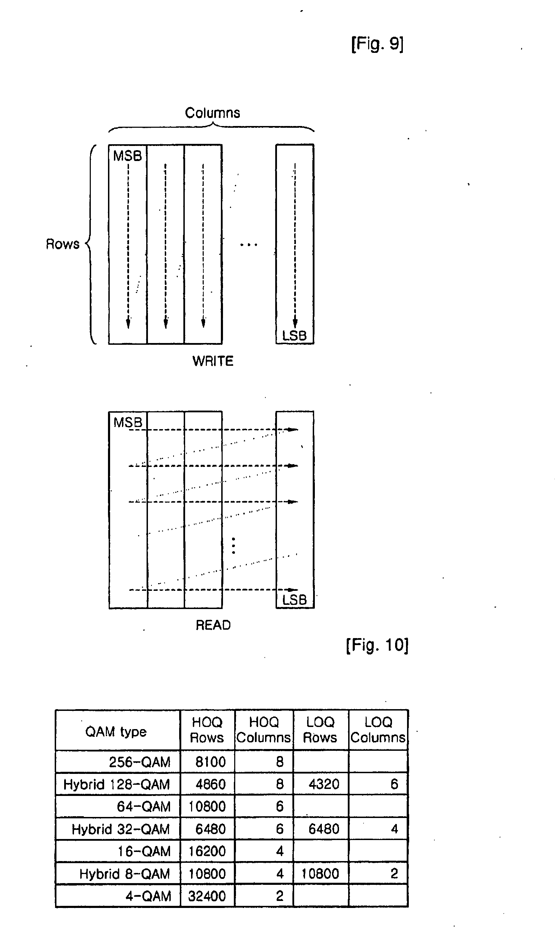

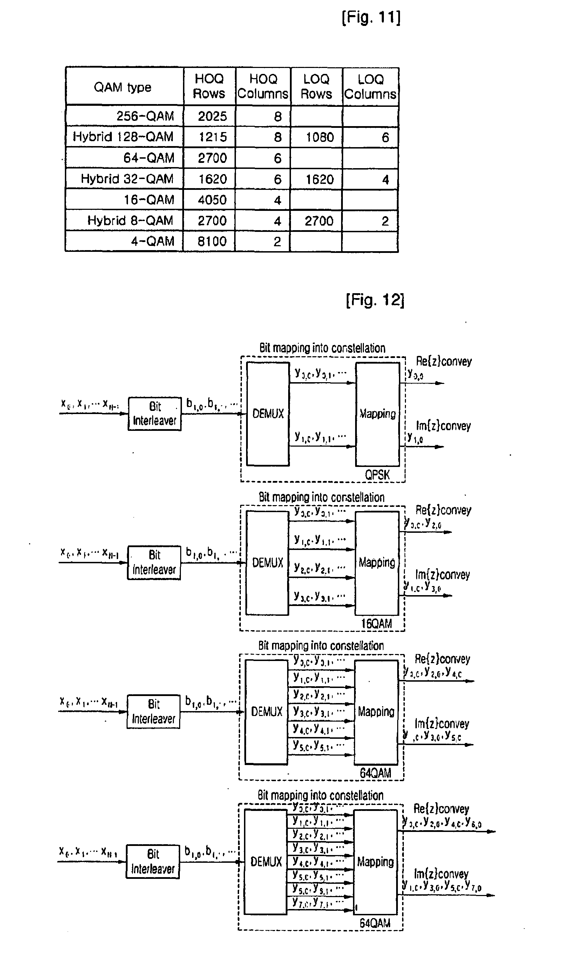

Fig. 9 shows an example of bit interleaving. Bits can be saved into a matrix type memory having columns and rows in the direction of column or in the direction of the blue arrow. Then the saved bits can be read out in the direction of row or in the direction of the red arrow. Figs. 10 and 11 show numbers of columns and rows of HOQ bit interleaver (d-403a) and LOQ bit interleaver (d-403b) according to QAM modulation type. As seen in the tables, when a typical even-QAM is used but a hybrid modulation is not used, only HOQ interleaving is used.

Fig. 12 shows an example of the demux. It shows that interleaved outputs according to QPSK, 16-QAM, 64-QAM, and 256-QAM can be demultiplexed and mapped. It also shows that the numbers of output bitstreams from demuxs are 2, 4, 6, and 8 respectively.

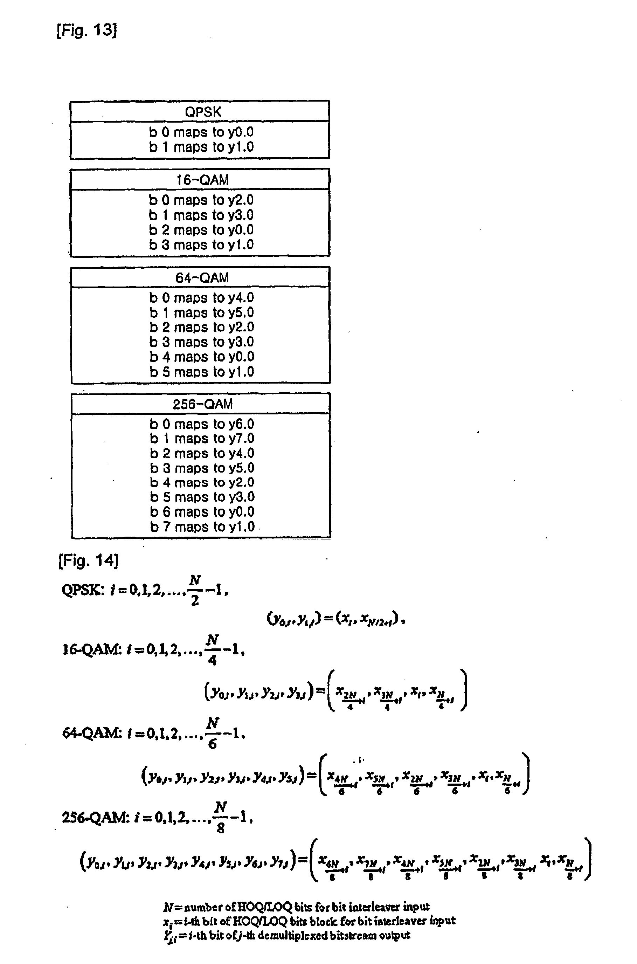

Detail of the demux operation is shown in Fig. 13. As seen in the figure, output order of interleaver can be changed by demux. For example, for the case of 16-QAM, bitstreams can be outputted as j-th output bitstream of each demux according to a value resulting from performing an modulo-4 operation on index of input bitstream b. Fig. 13 shows a relationship between a value resulting from a modulo operation and demux output branch index j.

Fig. 14 shows a relationship between an input bitstream of bit interleaver and an output bitstream of demux. As seen in the equations, dividing index of input bitstream by 2, 4, 6, and 8 is a result by the interleaving and mapping each index to index of output bitstream is a result by the demux.

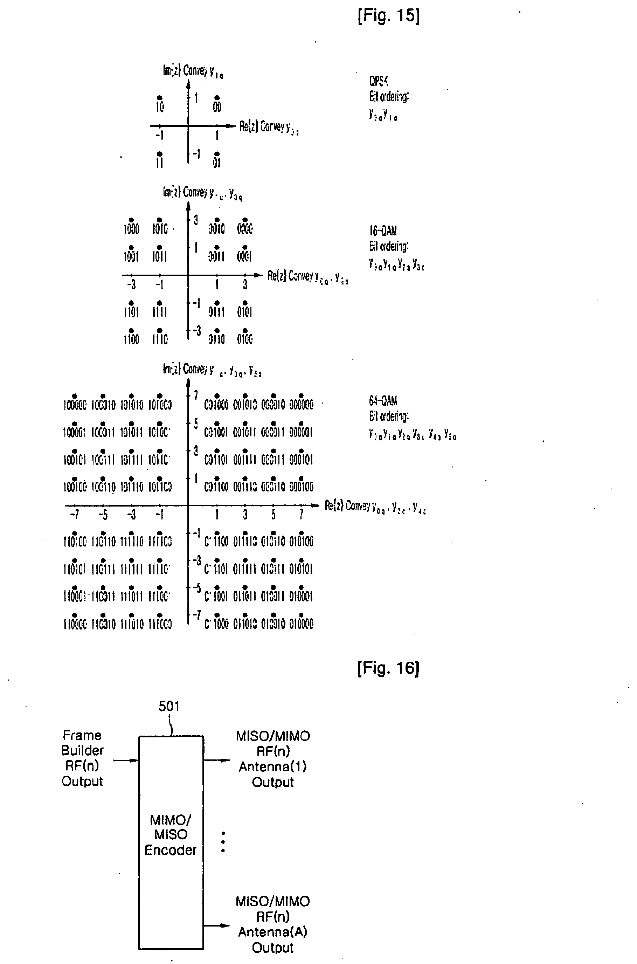

Fig. 15 shows an example of QAM symbol mapping. Output bitstream of demux can be converted into symbolstream by using Gray mapping rule. Even if it is not shown, it can be extended to constellation of 256-QAM or more.

Fig. 16 shows an example of MIMO/MISO Encoder. MIMO/MISO Encoder (501) applies MIMO/MISO method to obtain an additional diversity gain or payload gain. MIMO/MISO Encoder can output signals for total A of antennas. MIMO encoding can be performed individually on total A of antenna signals for each RF band among total R of RF bands. A is equal to or greater than 1.

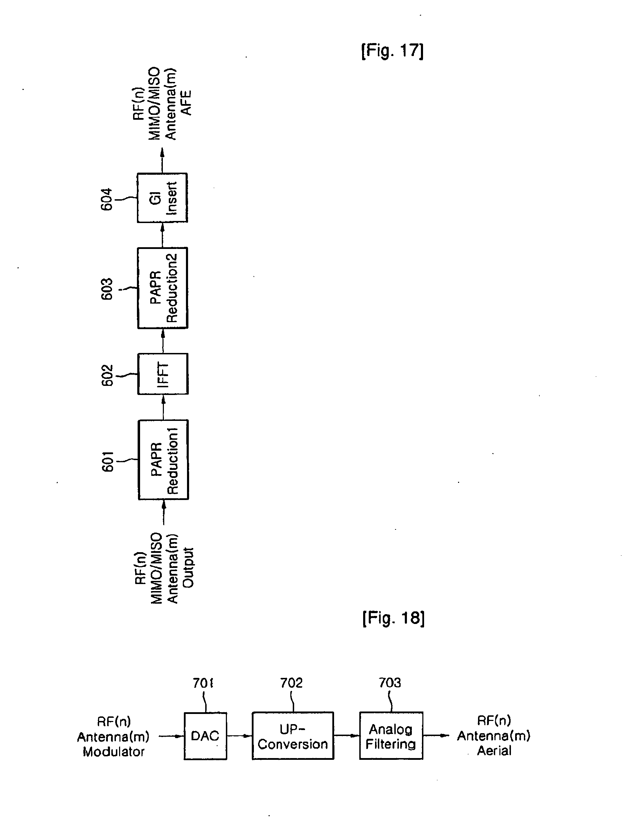

Fig. 17 shows an example of a modulator, specifically an example of an OFDM modulator. PAPR (Peak-to-Average Power Ratio) reduction 1 (601) can be performed on Antenna (m) signals of RF (n) bands. IFFT (602) can be performed for OFDM demodulation. PAPR reduction 2 (603) can be performed after the IFFT. ACE (Active Constellation Extension) and a tone reservation can be used for the PAPR reduction 2 (603). Lastly, guard interval (604) can be inserted.

Fig. 18 shows an example of the analog processor. Output of each modulator can be converted to an analog-domain signal by a DAC (Digital to Analog Conversion) (701), then can be transmitted to antenna after up-conversion (702). Analog filtering (703) can be performed.

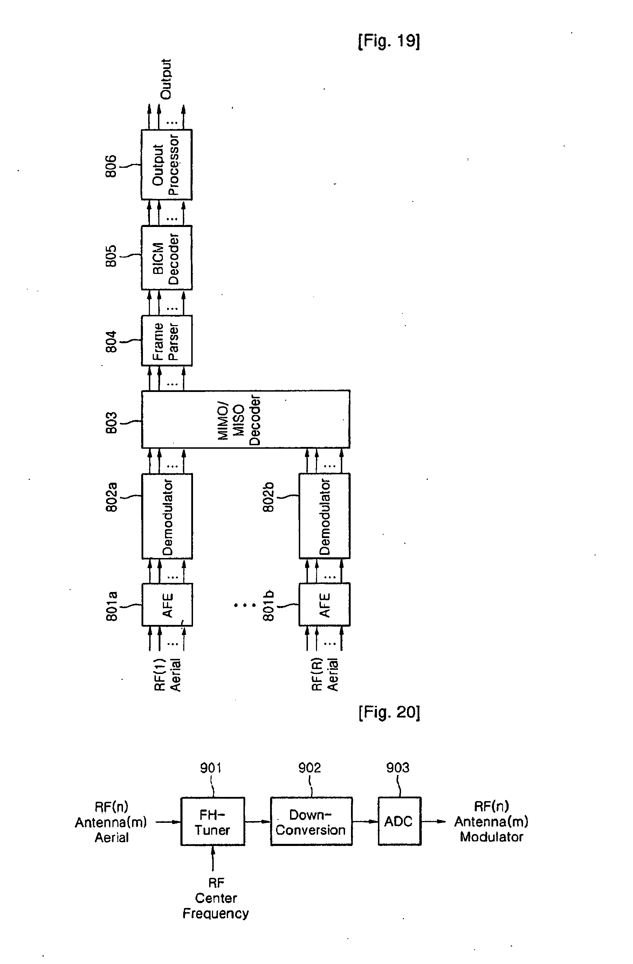

Fig. 19 shows an example of a TFS-OFDM receiver. When total R of RF bands are used for TFS system, received signals by AFE (Analog Front End) (801a,b) can be demodulated by demodulators (802a,b), then can be decoded by MIMO/MISO Decoder (803) to obtain diversity gain. Frame parser (804) can restore multiple PLP signals from received TFS frame. BICM decoder (805) can correct errors in a transmission channel. Finally, output processor (806) can restore signals according to necessary format.

Fig. 20 shows an example of an AFE (Analog Front End). FH (Frequency Hopping)-tuner (901) can perform a frequency hopping and tune signals according to inputted RF center frequency. After down-conversion (902), signals can be converted to digital signals by ADC (Analog to Digital Conversion) (903).

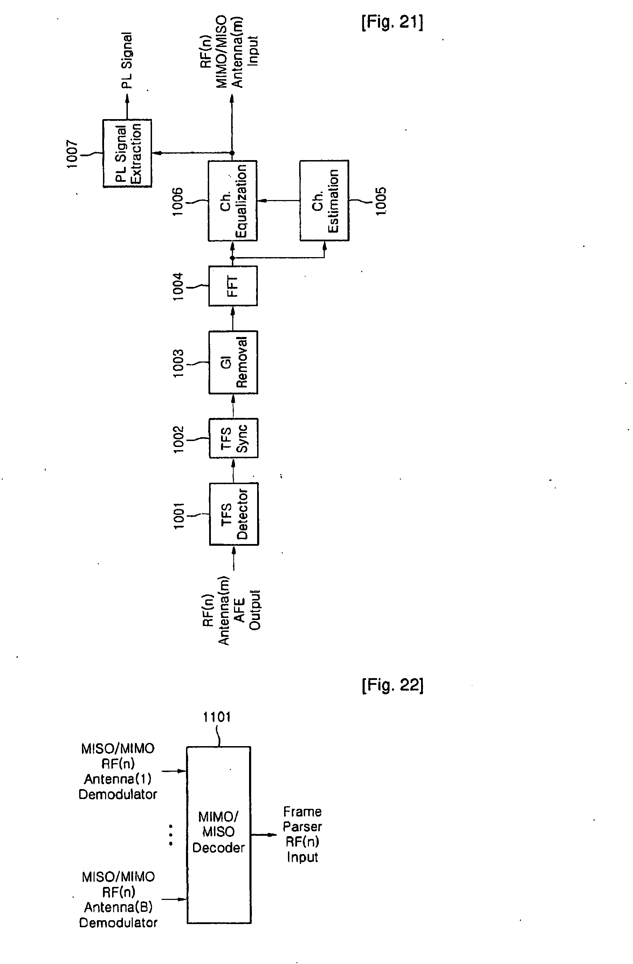

Fig. 21 shows an example of a demodulator, specifically an OFDM demodulator. TFS detector (1001) can detect TFS signals in a received digital signal. TFS sync (1002) can synchronize in time and frequency domains. After GI (Guard Interval) (1003) is removed, symbols in frequency domain can be obtained by performing FFT (1004) for OFDM demodulation. Channel Estimation (1005) can estimate distortion in a transmission channel based on pilot signals. Based on the estimated distortion, Channel Equalization (1006) can compensate distortion in the transmission channel. Finally, PL (Physical Layer) signaling information can be extracted from equalized data and can be transmitted to a system controller.

Fig. 22 shows an example of MIMIO/MISO decoder. Diversity and multiplexing gain can be obtained from data received from total B of antennas. For MIMO, B is greater than 1. For MISO, B is 1.

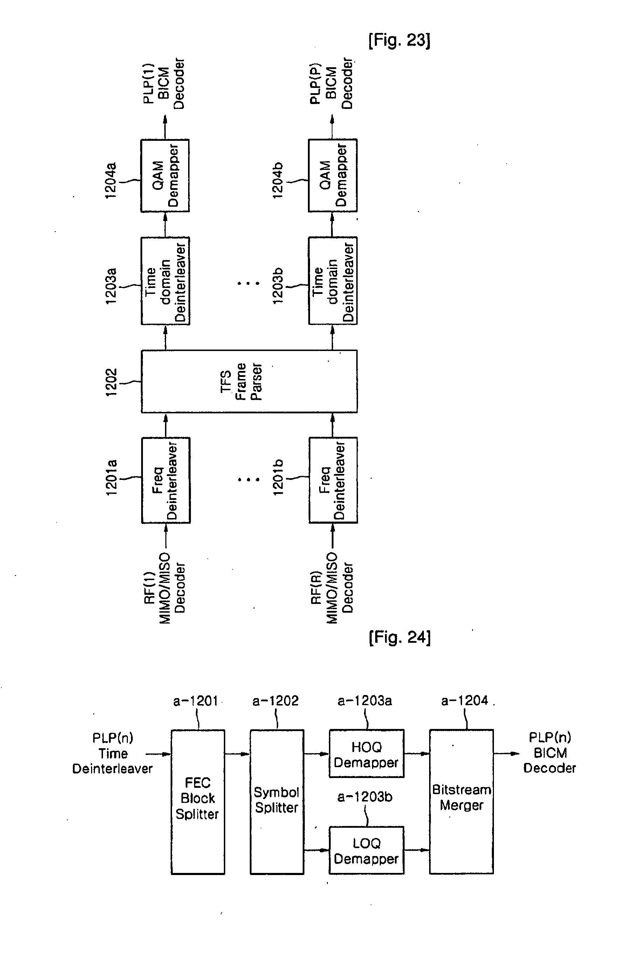

Fig. 23 shows an example of a Frame parser. Total R of the inputted RF bands data can undergo frequency deinterleaving (1201a, b), then can be reconstructed into datastream by TFS frame parser for each PLP (Physical Layer Path) according to a TFS scheduling. For each PLP, input data for BICM decoder can be obtained by using time domain deinterleaver (1203a, b) and QAM demapper (1204a, b). At this point, hybrid QAM demapper can be used as the QAM demapper.

Fig. 24 shows an example of performing a QAM demapper, which is a counterpart of Fig. 7 of transmitter. FEC block splitter can split inputted symbol block unit having 64800 bits into four symbol blocks of 16200 bits when short DVB-S2 LDPC mode is used. Symbol splitter (a-1202) can split inputted symbol streams into two symbol streams for HOQ and LOQ demapper. HOQ demapper (a-1203a) and LOQ demapper (a-1203b) can perform HOQ and LOQ demapping respectively. Bitstream merger (a-1204) can merge two inputted bit streams into a single output bitstream.

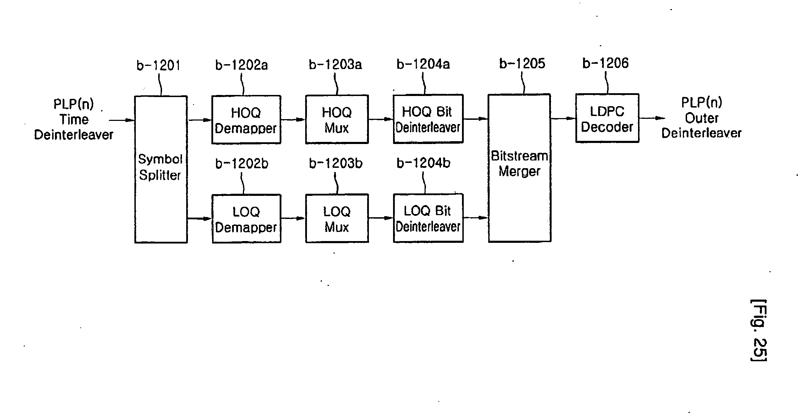

Fig. 25 shows an example of a QAM demapper combined with inner deinterleavers which are counterparts of Fig. 8 of transmitter. For each PLP, symbol splitter (b-1201) can split output of time domain deinterleaver into two symbol streams for HOQ and LOQ demappers. HOQ and LOQ Demapper (b- 1202a, b- 1202b) can convert symbolstreams into bitstreams. Each bitstream can be rearranged by multiplexer (b- 1203a, b- 1203b), which is a counterpart of the demux of Fig. 8 of transmitter. Two bit deinterleavers (b- 1204a, b-1206) can deinterleave bitstreams according to constellation type. Finally, bitstream merger (b-1205) can merge bitstreams into a single bitstream, then LDPC decoder (b-1206) can correct errors in a transmission channel.

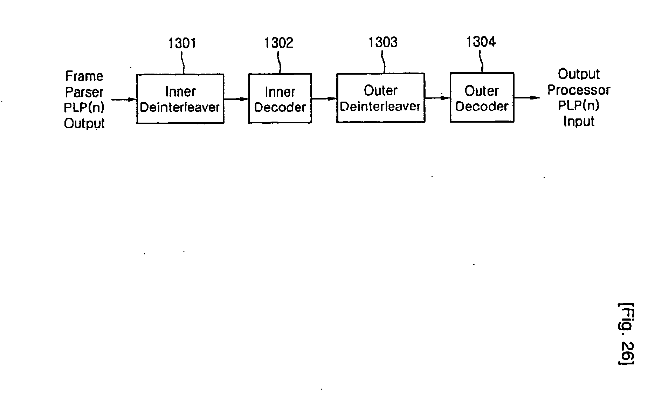

Fig. 26 shows an example of a BICM decoder. Inner deinterleaver (1301) and outer deinterleaver (1303) can convert burst errors in a transmission channel into random errors. Inner decoder (1302) and outer decoder (1304) can correct errors in the transmission channel.

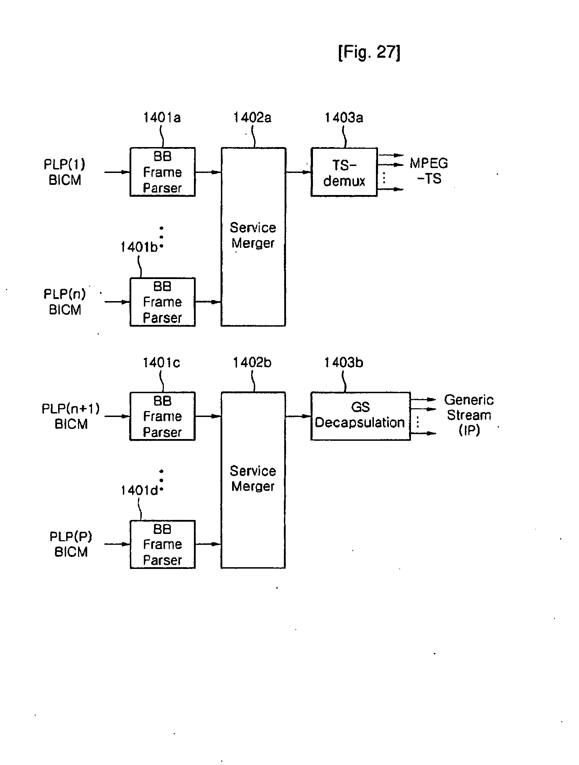

Fig. 27 shows an example of an output processor. BB (Baseband) frame parser (1401a∼d) can reconstruct input data into total P of PLP data. Service mergers (1402a, b) can merge data into a single TS (Transport Stream) and a single GSE stream. For TS, TS-demux (1403a) can reconstruct original TS. For GSE stream, GSE Decapsulation (1403b) can reconstruct generic stream.

It will be apparent to those skilled in the art that various modifications and variations can be made in the present invention. Thus, it is intended that the present invention covers the modifications and variations of this invention provided they come within the scope of the appended claims.

## Claims

1. A method of transmitting broadcast signals, the method comprising:
input processing input streams to output Baseband, BB, frames for multiple Physical Layer Paths, PLPs;
outer coding data in each of the BB frames per each of the multiple PLPs;
inner coding the outer coded data by a Low Density Parity Check, LDPC, scheme;
dividing the inner coded data into a first bit stream for a High Order Quadrature Amplitude Modulation, HOQ, mapping method and into a second bit stream for a Low Order Quadrature Amplitude Modulation, LOQ, mapping method;
Quadrature Amplitude Modulation, QAM, mapping the divided data using the HOQ mapping method and the LOQ mapping method;
encoding the mapped data using a Multi-Input Multi-Output, MIMO, scheme; and
Orthogonal Frequency Division Multiplex, OFDM, modulating the MIMO encoded data.

2. The method of claim 1, wherein the method further includes;
demultiplexing the first and the second bit streams into bitstreams for the HOQ mapping method and the LOQ mapping method.

3. The method of claim 2, wherein the demultiplexing further comprises;
changing an order of bits of data in the first bitstream of the divided two bitstreams according to the HOQ mapping method; and
changing an order of bits of data in the second bitstream of the divided two bitstreams according to the LOQ mapping method.

4. The method of claim 3, wherein the QAM mapping further comprising:
mapping data in the first bitstream to respective symbols using the HOQ mapping method; and
mapping data in the second bitstream to respective symbols using the LOQ mapping method.

5. An apparatus of transmitting broadcast signals, the apparatus comprising:
an input processor (101) configured to input process input streams to output Baseband, BB, frames for multiple Physical Layer Paths, PLPs;
an outer coder (301) configured to outer code data in each of the BB frames per each of the multiple PLPs;
an inner coder (401) configured to inner code the outer coded data by a Low Density Parity Check, LDPC, scheme;
a bit stream parser(d402) configured to divide the inner coded data into a first bit stream for a High Order Quadrature Amplitude Modulation, HOQ, mapping method and into a second bit stream for a Low Order Quadrature Amplitude Modulation, LOQ, mapping method;
a Quadrature Amplitude Modulation, QAM, mapper(d-405a, d-405b) configured to map the divided data using the HOQ mapping method and the LOQ mapping method;
an encoder (104) configured to encode the mapped data using a Multi-Input Multi-Output, MIMO, scheme; and
an Orthogonal Frequency Division Multiplex, OFDM, modulator (105a, 105b) configured to modulate the MIMO encoded data.

6. The apparatus of claim 5, wherein the method further includes;
a demultiplexer (d-404a, d-404b) configured to demultiplex the first and the second bit streams into bitstreams for the HOQ mapping method and the LOQ mapping method.

7. The apparatus of claim 6, wherein the demultiplexer (d-404a, d-404b) is further adapted to change an order of bits of data in the first bitstream of the divided two bitstreams according to the HOQ mapping method and to change an order of bits of data in the second bitstream of the divided two bitstreams according to the LOQ mapping method.

8. The apparatus of claim 7, wherein the QAM mapper (d-405a, d-405b) is further adapted to map data in the first bitstream to respective symbols using the HOQ mapping method and to map data in the second bitstream to respective symbols using the LOQ mapping method.

9. A method of receiving broadcast signals, the method comprising:
receiving the broadcast signals and Orthogonal Frequency Division Multiplex, OFDM, demodulating data in the received broadcast signals;
decoding the demodulated data using a Multi-Input Multi-Output, MIMO, scheme;
Quadrature Amplitude Modulation, QAM, demapping the decoded data using a High Order Quadrature Amplitude Modulation, HOQ, demapping method and a Low Order Quadrature Amplitude Modulation, LOQ, demapping method;
inner decoding the QAM demapped data per a single Physical Layer Path, PLP, by a Low Density Parity Check, LDPC, scheme;
outer decoding the inner decoded data; and
output processing the outer decoded data.

10. The method of claim 9, wherein the method further includes;
dividing the decoded data into two symbol streams.

11. The method of claim 10, wherein the QAM demapping further comprises;
demapping the first symbol stream of the two symbol streams into a first bitstream using the HOQ demapping method; and
demapping the second symbol stream of the two symbol streams into a second bitstream using the LOQ demapping method.

12. The method of claim 11, wherein the method further comprises:
changing an order of bits in the first bitstream according to the HOQ demapping method;
changing an order of bits in the second bitstream according to the LOQ demapping method; and
merging the first and second multiplexed bitstreams to a data per the single PLP.

13. An apparatus of receiving broadcast signals, the apparatus comprising:
an Orthogonal Frequency Division Multiplex, OFDM, demodulator (802a, 802b) configured to receive the broadcast signals and OFDM demodulate data in the received broadcast signals;
a decoder (803) configured to decode the demodulated data using a Multi-Input Multi-Output, MIMO, scheme;
a Quadrature Amplitude Modulation, QAM, demapper (1202a, 1202b) configured to demap the decoded data using a High Order Quadrature Amplitude Modulation, HOQ, demapping method and a Low Order Quadrature Amplitude Modulation, LOQ, demapping method;
an inner decoder (b-1206) configured to inner decode the QAM demapped data per a single Physical Layer Path, PLP, by a Low Density Parity Check, LDPC, scheme;
an outer decoder (1304) configured to outer decode the inner decoded data; and
an output processor (806) configured to output process the outer decoded data.

14. The apparatus of claim 13, wherein the apparatus further includes;
a symbol splitter (b-1201) configured to divide the decoded data into two symbol streams.

15. The apparatus of claim 14, wherein the QAM demapper (1202a, 1202b) is further configured to demap the first symbol stream of the two symbol streams into a first bitstream using the HOQ demapping method and to demap the second symbol stream of the two symbol streams into a second bitstream using the LOQ demapping method.

16. The apparatus of claim 15, wherein the apparatus further comprises:
a first multiplexer (b-1203a) configured to change an order of bits in the first bitstream according to the HOQ demapping method;
a second multiplexer (b-1203b) configured to change an order of bits in the second bitstream according to the LOQ demapping method; and
a merger (b-1205) configured to merge the first and second multiplexed bitstreams per the single PLP.

## Patentansprüche

1. Verfahren zum Senden von Rundfunksignalen, wobei das Verfahren die Schritte aufweist:
Eingangsverarbeiten von Eingangs-Streams zum Ausgeben von Basisband, BB,-Rahmen für mehrere Physikalische-Schicht-Wege, PLPs;
Außencodieren von Daten in jedem der BB-Rahmen für jeden der mehreren PLPs;
Innencodieren der außencodierten Daten durch ein Low Density Parity Check, LDPC, -Schema;
Zerlegen der innencodierten Daten in einen ersten Bitstream für ein Quadraturamplitudenmodulations-Abbildungsverfahren hoher Ordnung, HOQ, und in einen zweiten Bitstream für ein Quadraturamplitudenmodulations-Abbildungsverfahren niedriger Ordnung, LOQ;
Quadraturamplitudenmodulations, QAM,- Abbilden der zerlegten Daten unter Verwendung des HOQ-Abbildungsverfahrens und des LOQ-Abbildungsverfahrens;
Codieren der abgebildeten Daten unter Verwendung eines Multi-Input/Multi-Output, MIMO- Schemas; und
orthogonales Frequenzmultiplex, OFDM,- Modulieren der MIMO-codierten Daten.

2. Verfahren nach Anspruch 1, wobei das Verfahren ferner das Demultiplexen des ersten und des zweiten Bitstreams in Bitstreams für das HOQ-Abbildungsverfahren und das LOQ-Abbildungsverfahren aufweist.

3. Verfahren nach Anspruch 2, wobei das Demultiplexen ferner aufweist:
Ändern einer Datenbitreihenfolge im ersten Bitstream der beiden zerlegten Bitstreams gemäß dem HOQ-Abbildungsverfahren; und
Ändern einer Datenbitreihenfolge im zweiten Bitstream der beiden zerlegten Bitstreams gemäß dem LOQ-Abbildungsverfahren.

4. Verfahren nach Anspruch 3, wobei die QAM-Abbildung ferner aufweist:
Abbilden von Daten im ersten Bitstream auf jeweilige Symbole unter Verwendung des HOQ-Abbildungsverfahrens; und
Abbilden von Daten im zweiten Bitstream auf jeweilige Symbole unter Verwendung des LOQ-Abbildungsverfahrens.

5. Vorrichtung zum Senden von Rundfunksignalen, wobei die Vorrichtung aufweist:
einen Eingangsprozessor (101), der dafür konfiguriert ist, eine Eingangsverarbeitung für Eingangs-Streams auszuführen, um Basisband, BB,-Rahmen für mehrere Physikalische-Schicht-Wege, PLPs, auszugeben;
einen Außencodierer (301), der dafür konfiguriert ist, eine Außencodierung für Daten in jedem der BB-Rahmen für jeden der mehreren PLPs auszuführen;
einen Innencodierer (401), der dafür konfiguriert ist, eine Innencodierung der außencodierten Daten durch ein Low Density Parity Check, LDPC,-Schema auszufiihren;
einen Bitstream-Parser (d-402), der dafür konfiguriert ist, die innencodierten Daten in einen ersten Bitstream für ein Quadraturamplitudenmodulations-Abbildungsverfahren hoher Ordnung, HOQ, und in einen zweiten Bitstream für ein Quadraturamplitudenmodulations-Abbildungsverfahren niedriger Ordnung, LOQ, zu zerlegen;
eine Quadraturamplitudenmodulations, QAM,-Abbildungseinrichtung (d-405a, d-405b), die dafür konfiguriert ist, die zerlegten Daten unter Verwendung des HOQ-Abbildungsverfahrens und des LOQ-Abbildungsverfahrens abzubilden;
einen Codierer, der dafür konfiguriert ist, die abgebildeten Daten unter Verwendung eines Multi-Input/Multi-Output, MIMO,-Schemas zu codieren; und
einen orthogonalen Frequenzmultiplex, OFDM,- Modulator (105a, 105b), der dafür konfiguriert ist, die MIMO-codierten Daten zu modulieren.

6. Vorrichtung nach Anspruch 5, wobei die Vorrichtung ferner aufweist:
einen Demultiplexer (d-404a, d-404b), der dafür konfiguriert ist, den ersten und den zweiten Bitstream in Bitstreams für das HOQ-Abbildungsverfahren und das LOQ-Abbildungsverfahren zu demultiplexen.

7. Vorrichtung nach Anspruch 6, wobei der Demultiplexer (d-404a, d-404b) ferner dazu geeignet ist, eine Datenbitreihenfolge im ersten Bitstream der beiden zerlegten Bitstreams gemäß dem HOQ-Abbildungsverfahren zu ändern und eine Datenbitreihenfolge im zweiten Bitstream der beiden zerlegten Bitstreams gemäß dem LOQ-Abbildungsverfahren zu ändern.

8. Vorrichtung nach Anspruch 7, wobei die QAM-Abbildungseinrichtung (d-405a, d-405b) ferner dazu geeignet ist, Daten im ersten Bitstream unter Verwendung des HOQ-Abbildungsverfahrens auf jeweilige Symbole abzubilden und Daten im zweiten Bitstream unter Verwendung des LOQ-Abbildungsverfahrens auf jeweilige Symbole abzubilden.

9. Verfahren zum Empfangen von Rundfunksignalen, wobei das Verfahren die Schritte aufweist:
Empfangen der Rundfunksignale und orthogonales Frequenzmultiplex, OFDM,-Demodulieren von Daten in den empfangenen Rundfunksignalen;
Decodieren der demodulierten Daten unter Verwendung eines Multi-Input/Multi-Output, MIMO,-Schemas;
Quadraturamplitudenmodulations, QAM,- Rückabbilden der decodierten Daten unter Verwendung eines Quadraturamplitudenmodulations-Rückabbildungsverfahrens hoher Ordnung, HOQ, und eines Quadraturamplitudenmodulations-Rückabbildungsverfahrens niedriger Ordnung, LOQ,
Innencodieren der QAM-rückabgebildeten Daten für jeden einzelnen Physikalische-Schicht-Weg, PLP, durch ein Low Density Parity Check, LDPC,-Schema;
Außendecodieren der innendecodierten Daten; und
Ausgangsverarbeiten der außendecodierten Daten.

10. Verfahren nach Anspruch 9, wobei das Verfahren ferner das Zerlegen der decodierten Daten in zwei Symbol-Streams aufweist.

11. Verfahren nach Anspruch 10, wobei das QAM-Rückabbilden ferner die Schritte aufweist:
Rückabbilden des ersten Symbol-Streams der beiden Symbol-Streams in einen ersten Bitstream unter Verwendung des HOQ-Rückabbildungsverfahrens; und
Rückabbilden des zweiten Symbol-Streams der beiden Symbol-Streams in einen zweiten Bitstream unter Verwendung des LOQ-Rückabbildungsverfahrens.

12. Verfahren nach Anspruch 11, wobei das Verfahren ferner die Schritte aufweist:
Ändern einer Bitreihenfolge im ersten Bitstream gemäß dem HOQ-Rückabbildungsverfahren;
Ändern einer Bitreihenfolge im zweiten Bitstream gemäß dem LOQ-Rückabbildungsverfahren; und
Zusammenführen des ersten und des zweiten gemultiplexten Bitstreams in Daten für jeden einzelnen PLP.

13. Vorrichtung zum Empfangen von Rundfunksignalen, wobei die Vorrichtung aufweist:
einen orthogonalen Frequenzmultiplex, OFDM,-Demodulator (802a, 802b), der dafür konfiguriert ist, die Rundfunksignale zu empfangen und Daten in den empfangenen Rundfunksignalen einer OFDM-Demodulation zu unterziehen;
einen Decodierer (803), der dafür konfiguriert ist, die demodulierten Daten unter Verwendung eines Multi-Input/Multi-Output, MIMO,-Schemas zu decodieren;
einen Quadraturamplituden, QAM,-Demapper (1202a, 1202b), der dafür konfiguriert ist, die decodierten Daten unter Verwendung eines Quadraturamplitudenmodulations-Rückabbildungsverfahrens hoher Ordnung, HOQ, und eines Quadraturamplitudenmodulations-Rückabbildungsverfahrens niedriger Ordnung, LOQ, rückabzubilden;
einen Innendecodierer (b-1206), der dafür konfiguriert ist, die QAMrückabgebildeten Daten für jeden einzelnen Physikalische-Schicht-Weg, PLP, durch ein Low Density Parity Check, LDPC,-Schema einer Innendecodierung zu unterziehen;
einen Außendecodierer (1304), der dafür konfiguriert ist, die innendecodierten Daten einer Außendecodierung zu unterziehen; und
einen Ausgangsprozessor (806), der dafür konfiguriert ist, die außendecodierten Daten einer Ausgangsverarbeitung zu unterziehen.

14. Vorrichtung nach Anspruch 13, wobei die Vorrichtung ferner einen Symbolsplitter (b-1201) aufweist, der dafür konfiguriert ist, die decodierten Daten in zwei Symbol-Streams zu zerlegen.

15. Vorrichtung nach Anspruch 14, wobei der QAM-Demapper (1202a, 1202b) ferner dafür konfiguriert ist, den ersten Symbol-Stream der beiden Symbol-Streams unter Verwendung des HOQ-Rückabbildungsverfahrens in einen ersten Bitstream rückabzubilden und den zweiten Symbol-Stream der beiden Symbol-Streams unter Verwendung des LOQ-Rückabbildungsverfahrens in einen zweiten Bitstream rückabzubilden.

16. Vorrichtung nach Anspruch 15, wobei die Vorrichtung ferner aufweist:
einen ersten Multiplexer (b-1203a), der dafür konfiguriert ist, eine Bitreihenfolge im ersten Bitstream gemäß dem HOQ-Rückabbildungsverfahren zu ändern;
einen zweiten Multiplexer (b-1203b), der dafür konfiguriert ist, eine Bitreihenfolge im zweiten Bitstream gemäß dem LOQ-Rückabbildungsverfahren zu ändern; und
einen Zusammenführer (Merger) (b-1205), der dafür konfiguriert ist, den ersten und den zweiten gemultiplexten Bitstream für jeden einzelnen PLP zusammenzuführen.

## Revendications

1. Procédé de transmission de signaux de diffusion, le procédé comprenant :
le traitement d'entrée de trains d'entrée pour produire des trames en bande de base, BB, pour de multiples trajets de couche physique, PLP ;
le codage extérieur de données dans chacune des trames BB pour chacun des multiples PLP ;
le codage intérieur des données ayant subi un codage extérieur par un système à contrôle de parité à faible densité, LDPC ;
la division des données ayant subi un codage intérieur en un premier train de bits pour un procédé de mappage à modulation d'amplitude en quadrature d'ordre supérieur, HOQ, et en un second train de bits pour un procédé de mappage à modulation d'amplitude en quadrature d'ordre inférieur, LOQ ;
le mappage à modulation d'amplitude en quadrature, QAM, des données divisées en utilisant le procédé de mappage HOQ et le procédé de mappage LOQ ;
l'encodage des données mappées en utilisant un système à entrées multiples et à sorties multiples, MIMO ; et
la modulation à multiplexage par répartition orthogonale de la fréquence, OFDM, des données ayant subi un encodage MIMO.

2. Procédé selon la revendication 1, dans lequel le procédé comprend en outre :
le démultiplexage des premier et second trains de bits en trains de bits pour le procédé de mappage HOQ et le procédé de mappage LOQ.

3. Procédé selon la revendication 2, dans lequel le démultiplexage comprend en outre :
le changement d'un ordre de bits de données dans le premier train de bits des deux trains de bits divisés selon le procédé de mappage HOQ ; et
le changement d'un ordre de bits de données dans le second train de bits des deux trains de bits divisés selon le procédé de mappage LOQ.

4. Procédé selon la revendication 3, dans lequel le mappage QAM comprend en outre :
le mappage de données dans le premier train de bits sur des symboles respectifs en utilisant le procédé de mappage HOQ ; et
le mappage de données dans le second train de bits sur des symboles respectifs en utilisant le procédé de mappage LOQ.

5. Appareil de transmission de signaux de diffusion, l'appareil comprenant :
un processeur d'entrée (101) configuré pour réaliser un traitement d'entrée de trains d'entrée pour produire des trames en bande de base, BB, pour de multiples trajets de couche physique, PLP ;
un codeur extérieur (301) configuré pour réaliser un codage extérieur de données dans chacune des trames BB pour chacun des multiples PLP ;
un codeur intérieur (401) configuré pour réaliser un codage intérieur des données ayant subi un codage extérieur par l'intermédiaire d'un système à contrôle de parité à faible densité, LDPC ;
un analyseur syntaxique à trains de bits (d402) configuré pour diviser les données ayant subi un codage intérieur en un premier train de bits pour un procédé de mappage à modulation d'amplitude en quadrature d'ordre supérieur, HOQ, et en un second train de bits pour un procédé de mappage à modulation d'amplitude en quadrature d'ordre inférieur, LOQ ;
un mappeur à modulation d'amplitude en quadrature, QAM, (d-405a, d-405b) configuré pour mapper les données divisées en utilisant le procédé de mappage HOQ et le procédé de mappage LOQ ;
un encodeur (104) configuré pour encoder les données mappées en utilisant un système à entrées multiples et à sorties multiples, MIMO ; et
un modulateur à multiplexage par répartition orthogonale de la fréquence, OFDM, (105a, 105b) configuré pour moduler les données ayant subi un encodage MIMO.

6. Appareil selon la revendication 5, dans lequel le procédé comprend en outre :
un démultiplexeur (d-404a, d-404b) configuré pour démultiplexer les premier et second trains de bits en trains de bits pour le procédé de mappage HOQ et le procédé de mappage LOQ.

7. Appareil selon la revendication 6, dans lequel le démultiplexeur (d-404a, d-404b) est en outre adapté pour changer un ordre de bits de données dans le premier train de bits des deux trains de bits divisés selon le procédé de mappage HOQ et pour changer un ordre de bits de données dans le second train de bits des deux trains de bits divisés selon le procédé de mappage LOQ.

8. Appareil selon la revendication 7, dans lequel le mappeur QAM (d-405a, d-405b) est en outre adapté pour mapper des données dans le premier train de bits sur des symboles respectifs en utilisant le procédé de mappage HOQ et pour mapper des données dans le second train de bits sur des symboles respectifs en utilisant le procédé de mappage LOQ.

9. Procédé de réception de signaux de diffusion, le procédé comprenant :
la réception des signaux de diffusion et la démodulation à multiplexage par répartition orthogonale de la fréquence, OFDM, de données dans les signaux de diffusion reçus ;
le décodage des données démodulées en utilisant un système à entrées multiples et à sorties multiples, MIMO ;
le démappage à modulation d'amplitude en quadrature, QAM, des données décodées en utilisant un procédé de démappage à modulation d'amplitude en quadrature d'ordre supérieur, HOQ, et un procédé de démappage à modulation d'amplitude en quadrature d'ordre inférieur, LOQ ;
le décodage intérieur des données ayant subi un démappage QAM pour un seul trajet de couche physique, PLP, par un système à contrôle de parité à faible densité, LDPC ;
le décodage extérieur des données ayant subi un décodage intérieur ; et
le traitement de sortie des données ayant subi un décodage extérieur.

10. Procédé selon la revendication 9, dans lequel le procédé comprend en outre : la division des données décodées en deux trains de symboles.

11. Procédé selon la revendication 10, dans lequel le démappage QAM comprend en outre :
le démappage du premier train de symboles des deux trains de symboles en un premier train de bits en utilisant le procédé de démappage HOQ ; et
le démappage du second train de symboles des deux trains de symboles en un second train de bits en utilisant le procédé de démappage LOQ.

12. Procédé selon la revendication 11, dans lequel le procédé comprend en outre :
le changement d'un ordre de bits dans le premier train de bits selon le procédé de démappage HOQ ;
le changement d'un ordre de bits dans le second train de bits selon le procédé de démappage LOQ ; et
le fusionnement des premier et second trains de bits multiplexés en une donnée pour le seul PLP.

13. Appareil de réception de signaux de diffusion, l'appareil comprenant :
un démodulateur à multiplexage par répartition orthogonale de la fréquence, OFDM, (802a, 802b) configuré pour recevoir les signaux de diffusion et réaliser une démodulation OFDM de données dans les signaux de diffusion reçus ;
un décodeur (803) configuré pour décoder les données ayant subi une démodulation en utilisant un système à entrées multiples et à sorties multiples, MIMO ;
un démappeur à modulation d'amplitude en quadrature, QAM, (1202a, 1202b) configuré pour démapper les données décodées en utilisant un procédé de démappage à modulation d'amplitude en quadrature d'ordre supérieur, HOQ, et un procédé de démappage à modulation d'amplitude en quadrature d'ordre inférieur, LOQ ;
un décodeur intérieur (b-1206) configuré pour réaliser un décodage intérieur des données ayant subi un démappage QAM pour un seul trajet de couche physique, PLP, par l'intermédiaire d'un système à contrôle de parité à faible densité, LDPC ;
un décodeur extérieur (1304) configuré pour réaliser un décodage extérieur des données ayant subi un décodage intérieur ; et
un processeur de sortie (806) configuré pour réaliser un traitement de sortie des données ayant subi un décodage extérieur.

14. Appareil selon la revendication 13, dans lequel l'appareil comprend en outre :
un diviseur en symboles (b-1201) configuré pour diviser les données décodées en deux trains de symboles.

15. Appareil selon la revendication 14, dans lequel le démappeur QAM (1202a, 1202b) est en outre configuré pour démapper le premier train de symboles des deux trains de symboles en un premier train de bits en utilisant le procédé de démappage HOQ et pour démapper le second train de symboles des deux trains de symboles en un second train de bits en utilisant le procédé de démappage LOQ.

16. Appareil selon la revendication 15, dans lequel l'appareil comprend en outre :
un premier multiplexeur (b-1203a) configuré pour changer un ordre de bits dans le premier train de bits selon le procédé de démappage HOQ ;
un second multiplexeur (b-1203b) configuré pour changer un ordre de bits dans le second train de bits selon le procédé de démappage LOQ ; et
un fusionneur (b-1205) configuré pour fusionner les premier et second trains de bits multiplexés pour le seul PLP.
